# FASCICULE DE BREVET EUROPEEN

(11) **EP 0 519 150 B1**
(45) Date de publication et mention de la délivrance du brevet: **31.05.1995**
(21) Numéro de dépôt: 91830278.7
(22) Date de dépôt: 21.06.1991
(51) Int. Cl.: B27L 7/00, F16P 3/22

(54) **Dispositif de commande pour fendeuses à bois oléodynamiques**
Bedienungsvorrichtung für hydraulischem Holzspalter
Control means for hydraulic wood splitting machines

(43) Date de publication de la demande: 23.12.1992
(73) Titulaire: Ricca, Andrea, I-12044 San Biagio di Centallo (Cuneo) (IT)
(72) Inventeur: Ricca, Andrea, I-12044 San Biagio di Centallo (Cuneo) (IT)
(74) Mandataire: Gerbino, Angelo

(56) Documents cités:
- EP-A- 0 438 997
- DE-A- 3 011 496
- FR-A- 1 402 078
- US-A- 2 473 167
- US-A- 3 352 335

## Description

Ce brevet d'invention fait référence aux fendeuses oléodynamiquee et plus en particulier aux dispositifs qui commandes l'actionement de ces machines.

Les fendeuses traditionnelles (DE-A-3 011 496) se composent essentiellement d'une structure porteuse constituée par une pièce tubulaire métallique de section carré, préferentiellement en vertical, avec un support appuyé au sol et supportant une plate-forme pour la bûche à fendre; à l'intérieure de cette structure tubulaire glisse une colonne coaxiale tubulaire sur laquelle est fixé le dispositif de découpe, consistant d'un robuste couteau perpendiculaire à la colonne.

Le mouvement de la colonne et donc du dispositif de découpe en sens vertical est déterminé par un circuit oleodynamique connu connecté à un moteur, par exemple électrique, et équipé d'un distributeur hydraulique comprenant un levier permettant de contrôler l'ouverture au la fermeture du circuit et donc l'allée et retour de l'huile en pression; l'huile en pression met en fonction un piston hydraulique connecté à la dite colonne.

Ce levier est actionné directement par l'opérateur à la main ou à pédale.

La bûche se fend en la positionnant sur la plate-forme portée par la structure, au dessous du dispositif de découpe et donc, par l'actionnement de ce levier, par exemple à pédale, en mettant en function le circuit oleodynamique, qui à son tour déplace en bas le dispositif de découpe jusqu'à compléter l'opération. Ces machines, même avec plusieurs dispositifs et détails contre les accidents, ne sont pas entièrement exemptes de dangers pour l'opérateur, qui, pouvant avoir toujours au moin une main libre, et devant parfois l'utilise pour tenir la bûche en position de fendage et la ranger de la meilleure manière, est évidemment exposé à de possibles accidents. But de cette invention est celui d'éliminer ces inconvénients. Ce but est atteint en réalisant un dispositif de commande pour fendeuses à bois de type oléodynamique obligeant l'opérateur à utiliser les deux mains pour actionner le circuit oléodynamique et le dispositif de découpe, en évitant toute intervention manuelle de l'utilisateur sur la bûche ou près de la lame, selon la revendication 1;
Grâce à ces caractéristiques on réalise un dispositif de commande pour les fendeuses à bois de type oléodynamique donnant les meilleures garanties contre les accidents vu que son fonctionnement des moyens de prise comme pince ou étau garantit aussi la position et l'eventuel déplacement de la bûche sur la plate-forme. Ces poignées sont équipées de moyens élastiques. D'ultérieures caractéristiques et avantages de l'invention concernée résultent de la description détaillée suivant, fourni à titre d'exemple et donc non limitative en se réferant aux tables de support jointes, où
- fig. 1: vue perspective, avec détails hachurés pour clarté, de la fendeuse équipé du dispositif objet d'invention.

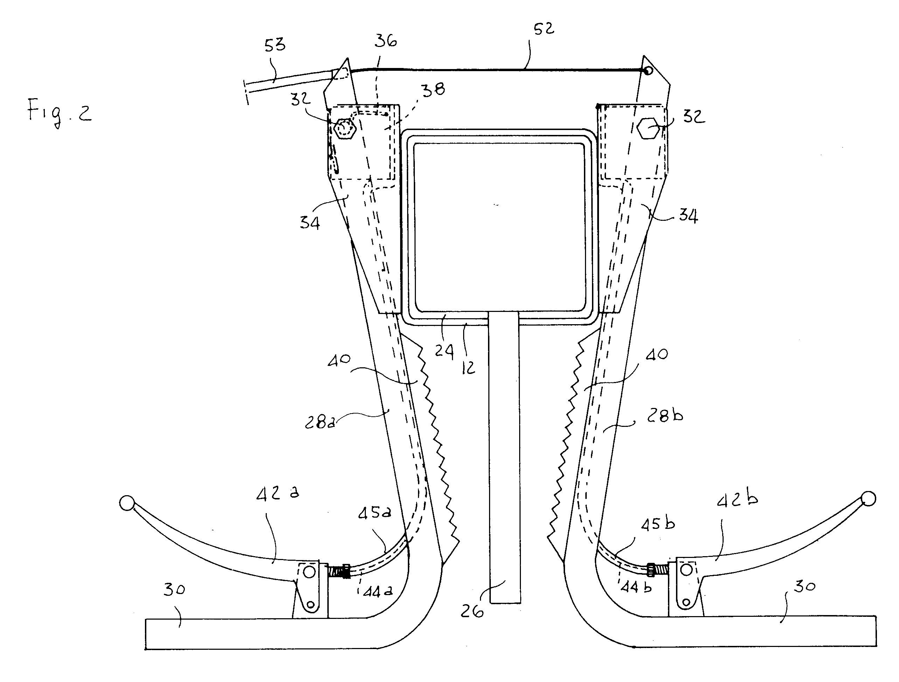

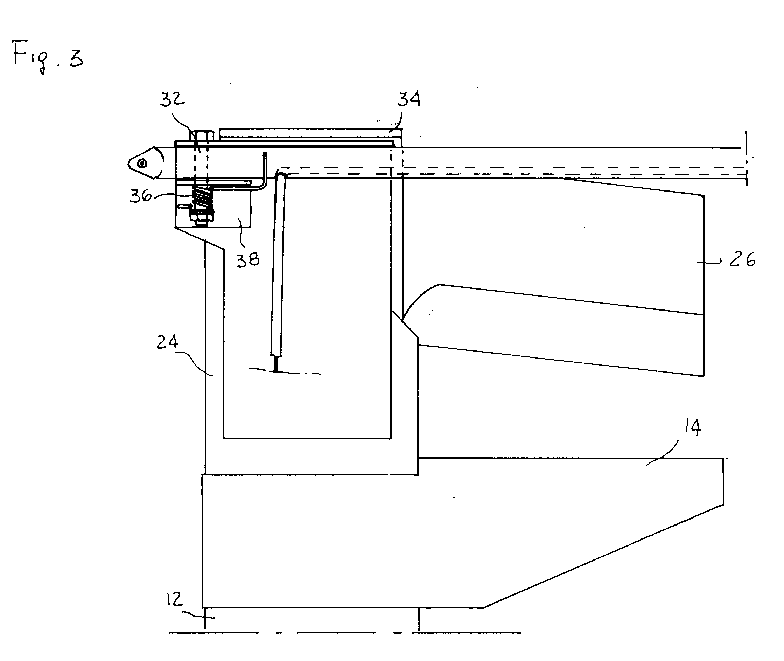

- fig. 2 et 3:: vues schématiques respectivement de l'haut et de côté d'une partie du dispositif;
- fig. 4:: vue schématique de la restante partie du dispositif appliquée au distribucteur hydraulique du circuit oléodynamique.

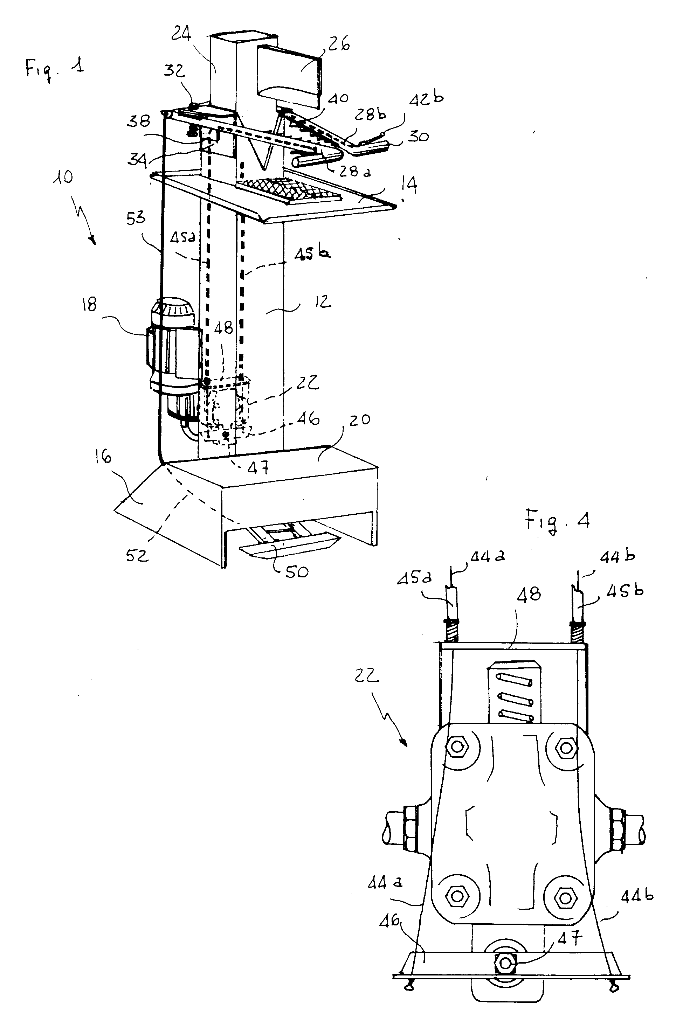

En faisant référence à la fig.1 on a indiqué avec 10 la fendeuse en géneral, essentiellement constituée par une structure de support à colonne 12, de robuste tubulaire métallique de section carrée, équipée d'une plate-forme 14 sur laquelle reposent les bûches à fendre et d'une base d'appui 16.

Cette structure à colonne est aussi connectée avec: un moteur, par example électrique 18, un réservoir de l'huile 20, et un distributeur 22 du circuit oléodynamique duquel partent les conduits d'entrée et de sortie de l'huile (non illustrés).

Dans cette structure à colonne 12 est inseré le support mobile 24 du couteau 26.

Ce support 24 est aussi constitué par un élément tubulaire métallique de section carrée et en mesure de glisser à l'interieur de la colonne fixe, avec un mouvement rectiligne alterné, commandé par un piston oléodynamique logé à l'interieur de la colonne (non illustré).

A l'extrémité supérieure de la colonne fixe 12, au dessus de la plate-forme d'appui des buches, sont connectés et pivotent deux moyens de prise de manière innovative. Les moyens de prise sont constitués de deux tubulaires métalliques de section ronde 28a et 28b ayant bord plié 30 comme le guidon d'un velo.

Ce raccord pivotant est réalisé par un goujon fileté 32 passant à l'intérieur d'étriers à L soudés ou vissés l'un d'un côté eet l'autre du côté opposé de la colonne fixe et dans un trou dans l'extrémité de chaque tubulaire à guidon.

Au dessous des tubulaires 28a et 28b, sur les goujons 32 on a introduit un ressort à torsion 36 dont les extrémités représentent une battue, l'une contre la partie verticale de l'étrier à L 38 plus petite et l'autre contre la partie externe du tubulaire à guidon.

La présence du moyen élastique de torsion 36 force les extrémités libres à s'approcher l'une de l'autre.

A chacun des tubulaires à guidon 28a et 28b et plus précisément dans la partie de ces derniers, qui se trouve au dessus de la plate-forme où ils se rencontrent, est soudée une plaque métallique dentée 40.

L'ensemble de cette structure que l'on vient de décrire forme une sorte de pince ou étau ayant la fonction de tenir la bûche dans la position de fendage. La bûche, une fois que l'on a appuyée sur la plate-forme 14 et insérée par force entre les deux plaques dentées 40 des tubulaires à guidon, en vainquant ainsi la resistence des ressorts 32, est prête à être fendue.

Vu que les tubulaires à guidon sont fixés en position pivotante autour des étriers, il est aussi possible de ranger la bûche à fendre dans la position désirée par rapport au couteau, sans intervenir manuellement sur ce dernier.

Pour actionner la commande du circuit oléodynamique provoquant la descent rapide de la pièce de découpe 26 vers la bûche, on a prévu ce qui suit: aux extrémités pliées des tubulaires à guidon 28a et 28b, on fixe deux leviers 42a et 42b similaires aux leviers de commande des freins des vélos.

Analoguement aux freins des vélos, ces léviers sont connectés aux câbles flexibles 44a et 44b avec gaines 45a et 45b.

L'extrémité opposée de chacun de ces câbles est connectée aux extrémités d'une lame suffisamment robuste 46, laquelle, comme illustré dans la fig. 4, a son point d'appui en 47 au levier de commande du distribucteur 22 du circuit oléodynamique.

Une plaque 48, soudée au dessus au distributeur et dans laquelle passent les câbles 44a et 44b, sert d'arrêt et contraste aux gaines 45a et 45b.

De cette description résulte évident que, seulement par l'actionnement contemporaire des deux leviers, et donc en tirant les deux câbles en même temps, il sera possible de déplacer en haut la lame 46 et par conséquant le levier de commande de distributeur hydraulique, en mettant ainsi l'huile en pression dans le circuit; en actionnant un levier seulement, en effect, la lame 46 se limitera à pivoter sur son point d'appui 47 sans actionner le distributeur. A la pédale 50 de fig.1 est connectée une extremité d'un troisième câble flexible 52 avec gaine 53 dont l'autre extremité est liée au tubulaire à guidon 28b près du goujon 32 en passant par l'extremité correspondante du tubulaire à guidon qui sert de contraste à la gaine 53.

De cette façon il est possible, en agissant sur la pédale 50, de faire tourner lègérement les tubulaires à guidon horizontalement l'une dans un sens et l'autre dans le sens opposé, en déterminant l'éloignement réciproque des parties pliées des tubulaires, de manière à libérer la bûche de l'étreinte des planques dentées 40. Cette opération est utile soit pour récupérer les parties de la bûche fendue soit pour insérer la bûche entre les tubulaires à guidon avant de commencer le travail.

## Revendications

1. Dispositif de commande pour des fendeuses à bois de type oléodynamique caractérisé par le fait qu'il comprend:
- un premier et un deuxième moyen de prise (28a, 28b) formant des éléments de guidon ayant leur point d'appui d'un côté et de l'autre d'un tubulaire de support (12) de la machine (10) au dessus d'une plate-forme d'appui (14) de la bûche à fendre;
- Un premier et un deuxième levier (42a, 42b) ayant leur point d'appui aux extremités libres des éléments de guidon;
- des moyens élastiques (36) en mesure de pousser les extremités libres l'une vers l'autre équipés de levier (42a, 42b) et moyens de prise;
- Une plaque métallique (46) ayant son point d'appui sur un levier d'un distributeur hydraulique (22);
- Un premier et un deuxième câble flexible (44a, 44b), les deux contenus en gaines (45a, 45b) liant les extremités de la plaque (46) et les leviers portés par le premier et deuxieme moyen de prise obligeant l'opérateur à utilise les deux mains pour actionner le distributeur hydraulique;
- Un troisième câble flexible (52), contenu dans une gaine (53), connectant les extremités des moyens de prise ayant leur point d'appui dans le tubulaire de support (12) de la machine avec une pédale fixée à la partie inferieure du tubulaire en question;
- moyens d'arrêt et de contraste (48) pour les gaines (45a, 45b, 53) contenant ces premier, deuxième et troisième câble.

2. Dispositif selon la revendication 1 caractérisé par le fait que ces moyens de prise (28a, 28b) sont représentés par des tubulaires métalliques de section ronde, dont l'extrémité libre (30) est pliée de manière à leur donner la forme d'un guidon.

3. Dispositif selon la revendication 1 caractérisé par le fait que la connexion pivotant de ces éléments tubulaires à guidon au tubulaire de support de la machine se fait par un goujon fileté (32) passant par des etriers à L (34) portés par le tubulaire de support de la machine.

4. Dispositif selon la revendication 1 caractérisé par le fait que le premier et le deuxième levier (42a, 42b) sont similaires aux leviers des freins des vélos.

5. Dispositif selon la revendication 1 caractérisé par le fait que ces moyens élastiques (36) sont constitués par des ressorts de torsion insérés sur ces goujons (32) au dessous des tubulaires à guidon dont les extrémités forment battue l'une contre la partie verticale des étriers, l'autre contre la partie externe des tubulaires.

6. Dispositif selon l'une des revendications précédentes caractérisé par le fait que des plaques dentées (40) sont soudées aux partie opposées de ces éléments tubulaires à guidon.

## Claims

1. Control device for wood splitters of the oleodynamic type, characterized in that it includes:
- first and second holding means (28a, 28b) forming handlebar elements having their bearing on either side of a tube (12) for support of the machine (10) above a platform (14) for support of the log to be split;
- first and second levers (42a, 42b) having their bearing at the free ends of the handlebar elements;
- elastic means (36) capable of pushing the free ends towards each other, equipped with lever (42a, 42b) and holding means;
- a metal plate (46) having its bearing on a lever of a hydraulic distributor (22);
- first and second flexible cables (44a, 44b), both contained in sheaths (45a, 45b) connecting the ends of the plate (46) and the levers carried by the first and second holding means, obliging the operator to use both hands to actuate the hydraulic distributor;
- a third flexible cable (52), contained in a sheath (53), connecting the ends of the holding means having their bearing in the machine supporting tube (12) to a pedal fixed to the lower portion of the tube in question;
- stop and contrast means (48) for the sheaths (45a, 45b, 53) containing these first, second and third cables.

2. Device according to claim 1, characterized in that these holding means (28a, 28b) are represented by metal tubes of round section, of which the free end (30) is bent so as to give them the shape of handlebars.

3. Device according to claim 1, characterised in that pivot connection of these tubular handlebar elements to the machine supporting tube is by a threaded bolt (32) passing through L-shaped clamps (34) carried by the machine supporting tube.

4. Device according to claim 1, characterised in that the first and second levers (42a, 42b) are similar to the brake levers of bicycles.

5. Device according to claim 1, characterised in that these elastic means (36) consist of torsion springs fitted on these bolts (32) below the handlebar tubes of which the ends abut one against the vertical portion of the clamps, the other against the outer portion of the tubes.

6. Device according to any of the preceding claims, characterised in that toothed plates (40) are welded to the opposed portions of these tubular handlebar elements.

## Patentansprüche

1. Bedienungsvorrichtung für ölhydraulische Holzspalter, dadurch gekennzeichnet, daß diese umfaßt:
erste und zweite Führungzelemente bildende Greifmittel (28a, 28b), die an beiden Seiten eines Tragrohres (12) der Vorrichtung (10) oberhalb einer Auflageplattform (14) für den zu spaltenden Klotz gelagert sind;
einen ersten und zweiten Hebel (42a, 42b), die an den freien Enden der Führungselemente gelagert sind;
elastische Mittel (36), die in der Lage sind, die mit den Hebeln (42a, 42b) und mit Greifmitteln versehenen freien Enden gegeneinanderzudrücken;
eine Metallplatte (46), die auf einem Hebel eines hydraulischen Verteilers (22) gelagert ist;
ein erstes und zweites elastisches Kabel (44a, 44b), die in Hülsen (45a, 45b) geführt sind, die die Enden der Platte (46) und die von den ersten und zweiten Greifmitteln getragenen Hebel verbinden, wodurch die die Vorrichtung bedienende Person gezwungen ist, beide Hände zur Betätigung des hydraulischen Verteilers zu benützen;
ein drittes elastisches, in einer Hülse (53) geführtes Kabel (52), welches die Enden der im Tragrohr (12) der Vorrichtung gelagerten Greifmittel mit einem am unteren Teil des genannten Tragrohres befestigten Pedal verbindet;
Rückhaltemittel (48) für die das erste, zweite und dritte Kabel enthaltende Hülsen (45a, 45b, 53).

2. Vorrichtung nach Anspruch 1, dadurch gekennzeichnet, daß die Greifmittel (28a, 28b) Metallrohre mit rundem Querschnitt sind, deren freie Enden (30) in die Form einer Lenkstange gebogen sind.

3. Vorrichtung nach Anspruch 1, dadurch gekennzeichnet, daß die Schwenkverbindung dieser rohrförmigen Führungselemente am Tragrohr der Vorrichtung durch eine Stiftschraube (32) gebildet ist, die sich durch L-förmige, vom Tragrohr der Vorrichtung getragene Bügel (34) erstreckt.

4. Vorrichtung nach Anspruch 1, dadurch gekennzeichnet, daß der erste und zweite Hebel (42a, 42b) Fahrradbremshebel ähnlich sind.

5. Vorrichtung nach Anspruch 1, dadurch gekennzeichnet, daß die elastischen Mittel (36) Torsionsfedern sind, die auf den Stiftschrauben (32) unterhalb der rohrförmigen Führungselemente eingesetzt sind, wobei ein Ende derselben einen Anschlag zum vertikalen Teil des Bügels und das andere Ende einen Anschlag zum äußeren Teil der Führungselemente bildet.

6. Vorrichtung nach einem der vorhergehenden Ansprüche, dadurch gekennzeichnet, daß die gezahnten Platten (40) gegenüberliegend mit Teilen der genannten rohrförmigen Führungselemente verschweißt sind.
